# EUROPÄISCHE PATENTANMELDUNG

(11) **EP 3 798 664 A1**
(43) Veröffentlichungstag der Anmeldung: **31.03.2021**
(21) Anmeldenummer: 19200472.9
(22) Anmeldetag: 30.09.2019
(51) Int. Cl.: G01S 5/02, H04W 4/00

(54) **VERFAHREN ZUM BETRIEB EINER FUNKBASIERTEN UND/ODER OPTISCHEN OBJEKTIDENTIFIZIERUNGSVORRICHTUNG, OBJEKTIDENTIFIZIERUNGSSYSTEM UND OBJEKTIDENTIFIZIERUNGSVORRICHTUNG**

(71) Anmelder: Siemens Aktiengesellschaft, 80333 München (DE)
(72) Erfinder: Schwarzer, Stefan, 90451 Nürnberg (DE); Werner, Andreas, 01217 Dresden (DE)

(57) **Zusammenfassung**

Die Erfindung betrifft eine funkbasierte bzw. optische Objektidentifizierungsvorrichtung (101-104), die über eine Geräteschnittstelle (110, 120, 130, 140) mit einem Transponder (111, 121, 141) eines Funkortungssystems verbunden wird, der an einer ausgewählten Stelle der Objektidentifizierungsvorrichtung angeordnet ist. Bei einer Erfassung seiner Position übermittelt der Transponder eine Geräteadresse bzw. einen Geräteidentifikator der Objektidentifizierungsvorrichtung an Basisstationen (501-504) bzw. weitere Transponder des Funkortungssystems. Diese Informationen (601-604) werden an ein der Objektidentifizierungsvorrichtung zugeordnetes Projektierungs- bzw. Überwachungssystem (200) übermittelt, das anhand der übermittelten Position des Transponders und der Geräteadresse bzw. des Geräteidentifikators dem Transponder im Projektierungs- bzw. Überwachungssystem zugeordnete Ortsinformationen validiert, ergänzt bzw. korrigiert.

## Beschreibung

Die vorliegende Erfindung betrifft ein Verfahren zum Betrieb einer funkbasierten bzw. optischen Objektidentifizierungsvorrichtung, ein Objektidentifizierungssystem zu dessen Durchführung und eine funkbasierte bzw. optische Objektidentifizierungsvorrichtung.

Funkbasierte Objektidentifizierungsvorrichtungen können beispielsweise RFID-Tags (radio-frequency identification) sein, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektromagnetischen Wechselfeldes ein Anfragesignal aus. Einerseits dient dieses elektro-magnetische Wechselfeld zur Energieversorgung insbesondere passiv betriebener RFID-Tags, die keine eigene Energiequelle aufweisen. Andererseits wird das elektro-magnetische Wechselfeld durch RFID-Tags zur Übermittlung eines Antwortsignals moduliert, beispielsweise durch Lastmodulation oder Variierung ihrer Antennenimpedanz.

Optische Objektidentifizierungs- bzw. -erfassungsvorrichtungen sind beispielsweise dafür vorgesehen, bewegte Objekte auf Fördereinrichtungen, wie Förderbändern, zu identifizieren und während eines Produktionsablaufs für eine Fertigungsautomatisierung zu verfolgen. Hierbei können die Objekte mit einem maschinenlesbaren Code markiert sein, der bei Passieren einer Kontrollstelle durch eine optische Objektidentifizierungsvorrichtung zu erfassen ist. Üblicherweise umfassen optische Objektidentifizierungsvorrichtungen zweidimensionale lichtempfindliche Sensoren mit Linsensystemen, die reale Gegenstände in eine Bildebene projizieren.

Objektidentifizierungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Objektidentifizierungssysteme zu schwerwiegenden Auswirkungen führen, im ungünstigsten Fall zu einem Stillstand eines Automatisierungssystems.

Aus DE 10 2009 008174 A1 ist ein Verfahren zur Ermittlung von Entfernung, Geschwindigkeit und Bewegungsrichtung eines RFID-Transponders bekannt, bei dem der RFID-Transponder auf übliche Weise mittels eines RFID-Lesegeräts abgefragt wird. Hierzu sendet das RFID-Lesegerät ein phasenweise moduliertes Versorgungsträgersignal aus. Ein Radarmodul sendet gleichzeitig ein Radarsignal aus, das vom RFID-Transponder empfangen und reflektiert wird. Das Versorgungsträgersignal und das Radarsignal weisen unterschiedliche Frequenzen auf. Das reflektierte Radarsignal wird wiederum vom Radarmodul empfangen. Aus dem reflektierten empfangenen Radarsignal wird eine Position des RFID-Transponders ermittelt. Das Radarsignal wird insbesondere dann ausgesendet, wenn auf das Versorgungsträgersignal keine Abfragedaten aufmoduliert werden.

In EP 3 031 039 A1 ist ein RFID-basiertes Positionserfassungssystem mit einem an einem zu erfassenden Objekt angebrachten RFID-Tag beschrieben, das mittels eines niederfrequenten Wecksignals aus einem Niedrigenergiemodus geweckt werden kann. Das Wecksignal umfasst Positionsinformationen, die einem das RFID-Tag mittels des Wecksignals erfassenden RFID-Lesegerät zugeordnet sind. Nach Aufwecken des RFID-Tags durch Empfang des Wecksignals erzeugt das RFID-Tag ein hochfrequentes Antwortsignal, das einen Identifizierungscode des RFID-Tags und die mittels des Wecksignals übermittelten Positionsinformationen umfasst.

Bestehende Logistik- bzw. Intralogistik-Lösungen können Daten unterschiedlicher Identifizierungs- und Ortungstechnologien verarbeiten und in einem gemeinsamen Datenmodell zusammenführen. Diese Daten können insbesondere von RFID- und Kamerasystemen stammen und umfassen üblicherweise eine Kennung bzw. einen Identifikator des jeweiligen RFID- und Kamerasystems sowie bei Echtzeitortungssystemen zusätzlich Raumkoordinaten von zur Ortung verwendeten Transpondern und ggf. sonstige Nutzdaten. Dabei ermöglichen die Kennung bzw. der Identifikator eine Verknüpfung von Daten. Eine solche Verknüpfung der Daten ist insbesondere sinnvoll, um ortsbezogene Aktionen auszuführen, beispielsweise bei einem Waren- bzw. Materialeingang einer Palette in einem Lager. Häufig sind jedoch Ortsangaben, die RFID- oder Kamerasystemen zugeordnet sind, fehlerhaft bzw. ungenau oder fehlen gänzlich.

Bislang müssen Positionen von Kameras oder RFID-Lesegeräten bzw. deren Antennen manuell vermessen und in einem Projektierungs- bzw. Überwachungssystem erfasst werden. Bei einer Projektierung sind mehrere Fehlerquellen möglich. Beispielsweise kann es sein, dass Positionen aus veralteten Plänen entnommen werden oder dass Positionen bereits von vornherein fehlerhaft oder ungenau erfasst worden sind. Bei Antennen von RFID-Lesegeräten kann es bei einer Zuordnung der Ortsangaben für die einzelnen Antennen zu Vertauschungen kommen. Eine weitere Fehlerquelle sind im Rahmen von Wartungs- oder Umbauarbeiten veränderte Positionen, die nach Abschluss der Wartungs- oder Umbauarbeiten nicht korrekt in das Projektierungs- bzw. Überwachungssystem übernommen werden.

Der vorliegenden Erfindung liegt daher die Aufgabe zugrunde, ein Verfahren zum Betrieb einer funkbasierten bzw. optischen Objektidentifizierungsvorrichtung zu schaffen, das auf einer zuverlässigen und genauen Positionserfassung der Objektidentifizierungsvorrichtung basiert, sowie zur Durchführung des Verfahrens geeignete Mittel bzw. Realisierungen anzugeben.

Diese Aufgabe wird erfindungsgemäß durch ein Verfahren mit den in Anspruch 1 angegebenen Merkmalen, durch ein Objektidentifizierungssystem mit den in Anspruch 9 angegebenen Merkmalen und durch eine funkbasierte bzw. optische Objektidentifizierungsvorrichtung mit den in Anspruch 10 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Betrieb einer funkbasierten bzw. optischen Objektidentifizierungsvorrichtung wird die Objektidentifizierungsvorrichtung über eine Geräteschnittstelle mit einem Transponder eines Funkortungssystems verbunden. Dieser Transponder ist an einer ausgewählten Stelle der Objektidentifizierungsvorrichtung angeordnet. Die funkbasierte bzw. optische Objektidentifizierungsvorrichtung kann insbesondere ein RFID-Lesegerät, eine Antenne eines RFID-Lesegeräts bzw. ein Kamerasystem sein. Vorzugsweise ist die ausgewählte Stelle der Objektidentifizierungsvorrichtung, an der der Transponder angeordnet ist, für die Position der Objektidentifizierungsvorrichtung charakteristisch. Die Geräteschnittstelle kann beispielsweise eine serielle Schnittstelle oder ein Antennenanschluss sein. Vorteilhafterweise erfolgt über die Geräteschnittstelle sowohl ein Datenaustausch als auch eine Energieversorgung des Transponders.

Erfindungsgemäß liest der Transponder über die Geräteschnittstelle eine Geräteadresse bzw. einen Geräteidentifikator der Objektidentifizierungsvorrichtung aus. Mittels mehrerer Basisstationen des Funkortungssystems bzw. mittels weiterer Transponder wird eine Position des Transponders erfasst. Bei einer Erfassung seiner Position übermittelt der Transponder die Geräteadresse bzw. den Geräteidentifikator der Objektidentifizierungsvorrichtung an die Basisstationen bzw. an die weiteren Transponder. Eine mit den Basisstationen bzw. weiteren Transpondern verbundene Auswertevorrichtung des Funkortungssystems übermittelt die erfasste Position des Transponders sowie die Geräteadresse bzw. den Geräteidentifikator der Objektidentifizierungsvorrichtung an ein der Objektidentifizierungsvorrichtung zugeordnetes Projektierungs- bzw. Überwachungssystem, insbesondere an ein Engineering-System. Das Projektierungs- bzw. Überwachungssystem validiert, ergänzt bzw. korrigiert anhand der übermittelten Position des Transponders und anhand der Geräteadresse bzw. des Geräteidentifikators dem Transponder im Projektierungs- bzw. Überwachungssystem zugeordnete Ortsinformationen. Somit können ortsbezogene Aktionen in einer Logistik- bzw. Intralogistik-Lösung auf Basis korrekt erfasster Positionen von Objektidentifizierungsvorrichtungen ausgeführt werden.

Ist die Objektidentifizierungsvorrichtung beispielsweise eine Antenne eines RFID-Lesegeräts und der Transponder über jeweils ein Antennenkabel sowohl mit dem RFID-Lesegerät als auch mit der Antenne verbunden, erfolgt über das Antennenkabei zwischen dem RFID-Lesegerät und dem Transponder vorzugsweise sowohl ein Datenaustausch als auch eine Energieversorgung des Transponders. Darüber hinaus liest der Transponder über das Antennenkabel zwischen dem RFID-Lesegerät und dem Transponder neben der Geräteadresse bzw. dem Geräteidentifikator des RFID-Lesegeräts eine der Antenne am RFID-Lesegerät zugeordnete Anschlussnummer aus und übermittelt diese Informationen zur Auswertung an das Projektierungs- bzw. Überwachungssystem.

Die Geräteadresse bzw. der Geräteidentifikator kann beispielsweise eine MAC-Adresse, eine IP-Adresse bzw. eine Seriennummer der Objektidentifizierungsvorrichtung umfassen. Vorzugsweise ist das Funkortungssystem ein zumindest RFID-basiertes Real-time Locating System. Ein solches Funkortungssystem ermöglich eine besonders schnelle und genaue Positionserfassung. Entsprechend einer weiteren vorteilhaften Ausgestaltung der vorliegenden Erfindung wird mittels des Projektierungs- bzw. Überwachungssystems zur Sicherstellung einer korrekten Transponder-Zuordnung eine optische Signalisierung an einem ausgewählten Transponder ausgelöst. Dies kann beispielsweise bei Verbindung des Transponders mit der Objektidentifizierungsvorrichtung erfolgen.

Das erfindungsgemäße Objektidentifizierungssystem ist zur Durchführung eines Verfahrens entsprechend vorangehenden Ausführungen geeignet und umfasst mehrere funkbasierte bzw. optische Objektidentifizierungsvorrichtungen. Die Objektidentifizierungsvorrichtungen sind jeweils über eine Geräteschnittstelle mit einem Transponder eines Funkortungssystems verbunden, der an einer ausgewählten Stelle der jeweiligen Objektidentifizierungsvorrichtung angeordnet ist. Außerdem sind mehrere Basisstationen des Funkortungssystems zur Erfassung einer Position des jeweiligen Transponders sowie eine mit den Basisstationen bzw. Transpondern verbundene Auswertevorrichtung des Funkortungssystems vorgesehen. Darüber hinaus umfasst das Objektidentifizierungssystem ein den Objektidentifizierungsvorrichtungen zugeordnetes Projektierungs- bzw. Überwachungssystem.

Die Transponder des erfindungsgemäßen Objektidentifizierungssystems sind jeweils dafür ausgestaltet und eingerichtet, über die Geräteschnittstelle eine Geräteadresse bzw. einen Geräteidentifikator der jeweiligen Objektidentifizierungsvorrichtung auszulesen und bei einer Erfassung ihrer jeweiligen Position die Geräteadresse bzw. den Geräteidentifikator der jeweiligen Objektidentifizierungsvorrichtung an die Basisstationen bzw. an die weiteren Transponder zu übermitteln. Ferner ist die Auswertevorrichtung dafür ausgestaltet und eingerichtet, die erfassten Positionen der Transponder und die Geräteadressen bzw. Geräteidentifikatoren der Objektidentifizierungsvorrichtungen an das Projektierungs- bzw. Überwachungssystem zu übermitteln. Das Projektierungs- bzw. Überwachungssystem ist dafür ausgestaltet und eingerichtet, anhand der übermittelten Positionen der Transponder sowie anhand der Geräteadressen bzw. Geräteidentifikatoren den Transpondern jeweils zugeordnete Ortsinformationen zu validieren, zu ergänzen bzw. zu korrigieren.

Die erfindungsgemäße funkbasierte bzw. optische Objektidentifizierungsvorrichtung umfasst ein RFID-Lesegerät, eine Antenne eines RFID-Lesegeräts bzw. ein Kamerasystem sowie zumindest einen Transponder für ein Funkortungssystem. Der Transponder ist an einer ausgewählten Stelle des RFID-Lesegeräts, der Antenne bzw. des Kamerasystems angeordnet und über eine Geräteschnittstelle mit dem RFID-Lesegerät, der Antenne bzw. dem Kamerasystem verbunden. Darüber hinaus ist der Transponder dafür ausgestaltet und eingerichtet, über die Geräteschnittstelle eine Geräteadresse bzw. einen Geräteidentifikator des RFID-Lesegeräts, der Antenne bzw. des Kamerasystems auszulesen und bei einer Erfassung seiner Position die Geräteadresse bzw. den Geräteidentifikator an Basisstationen des Funkortungssystems bzw. an weitere Transponder zu übermitteln.

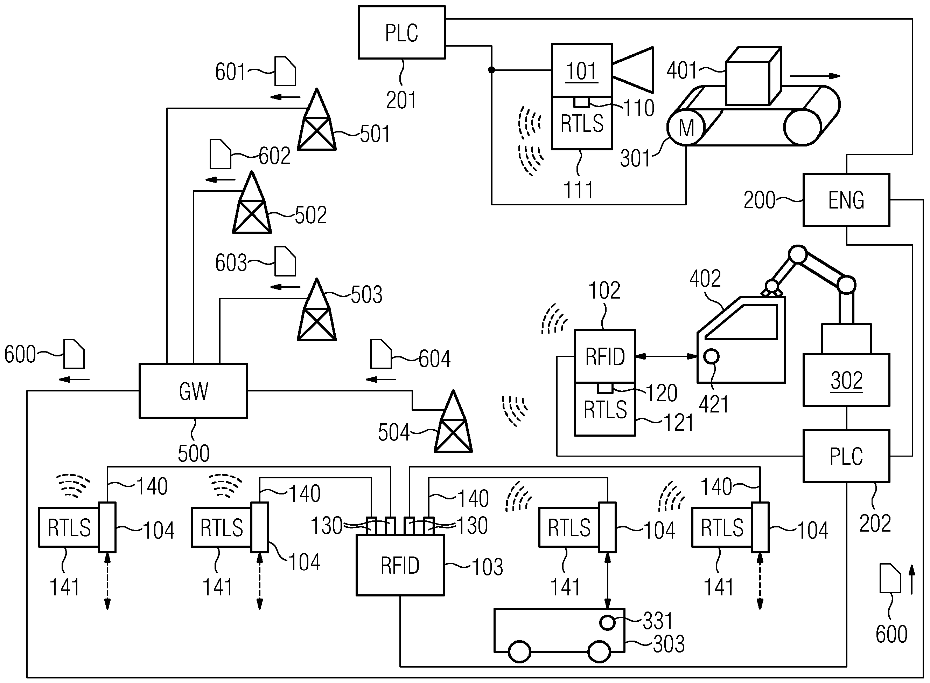

Die vorliegende Erfindung wird nachfolgend an einem Ausführungsbeispiel anhand der Zeichnung näher erläutert. Es zeigt die
- Figur: Objektidentifizierungssystem mit mehreren funkbasierten bzw. optischen Objektidentifizierungsvorrichtungen.

Das in der Figur dargestellte Objektidentifizierungssystem umfasst mehrere funkbasierte und optische Objektidentifizierungsvorrichtungen 101-104. Die optischen Objektidentifizierungsvorrichtungen sind im vorliegenden Ausführungsbeispiel als Kamerasystem 101, als erstes RFID-Lesegerät 102 und als zweites RFID-Lesegerät 103 mit mehreren Antennen 104 ausgestaltet. Die Antennen 104 sind dabei jeweils genau einem Anschluss 130 des zweiten RFID-Lesegeräts 103 zugeordnet und dort mit diesem über ein Antennenkabel 140 verbunden. Mittels des Kamerasystems 101 wird beispielsweise ein Transportband für Stückgüter 401 überwacht, dessen Antrieb 301 durch eine erste speicherprogrammierbare Steuerung 201 gesteuert wird. Dabei ist die erste speicherprogrammierbare Steuerung 201 auch mit dem Kamerasystem 101 verbunden.

Mit Hilfe des ersten RFID-Lesegeräts 102 werden in einer Fahrzeugfertigungslinie durch einen Roboter 302 transportierte und montierte Fahrzeugteile 402 erfasst, an denen durch das erste RFID-Lesegerät 102 detektierbare RFID-Transponder 421 angeordnet sind. Der Roboter 302 wird mittels einer zweiten speicherprogrammierbaren Steuerung 202 gesteuert, die auch mit dem ersten RFID-Lesegerät 102 verbunden ist und von diesem Informationen über erfasste Fahrzeugteile 402 abfragt. Das zweite RFID-Lesegerät 103 sowie seine Antennen 104 dienen im vorliegenden Ausführungsbeispiel zur Überwachung von autonomen Fahrzeugen 303, mit denen Produktionsgüter zur Fahrzeugfertigungslinie transportiert werden. An den autonomen Fahrzeugen 303 sind jeweils RFID-Transponder 331 angeordnet, die mittels der Antennen 104 des zweiten RFID-Lesegeräts 103 erfasst werden können. Auch das zweite RFID-Lesegerät 103 ist mit der zweiten speicherprogrammierbaren Steuerung 202 verbunden und stellt für diese Eingangsdaten bereit. Die beiden speicherprogrammierbaren Steuerungen 201, 202 sind wiederum mit einem Engineering-System 200 verbunden, mit dem u.a. die speicherprogrammierbaren Steuerungen 201, 202 sowie das Kamerasystem 101 und die beiden RFID-Lesegeräte 102, 103 projektiert bzw. überwacht werden.

Das Kamerasystem 101, das erste RFID-Lesegerät 102 und die Antennen 104 des zweiten RFID-Lesegeräts 103 sind jeweils über eine Geräteschnittstelle 110, 120, 130, 140 mit einem Transponder 111, 121, 141 eines Funkortungssystems verbunden, der an einer ausgewählten Stelle der jeweiligen Objektidentifizierungsvorrichtung angeordnet ist. Dabei ist die ausgewählte Stelle der Objektidentifizierungsvorrichtung, an der der Transponder angeordnet ist, für die Position der Objektidentifizierungsvorrichtung charakteristisch. Die Geräteschnittstelle 110, 120, 130, 140 wird beispielsweise durch eine serielle Schnittstelle oder einen Antennenanschluss gebildet. Über die Geräteschnittstelle 110, 120, 130, 140 erfolgt vorzugsweise sowohl ein Datenaustausch als auch eine Energieversorgung der Transponder 111, 121, 141.

Im vorliegenden Ausführungsbeispiel ist das Funkortungssystem ein zumindest UWB- bzw. RFID-basiertes Real-time Locating System (RTLS) bzw. Echtzeitortungssystem, das neben den Transpondern 111, 121, 141 mehrere Basisstationen 501-504 zur Erfassung der Positionen der Transponder 111, 121, 141 umfasst. Darüber hinaus kann das Funkortungssystem beispielsweise zusätzliche Komponenten zur GPS-, WLAN- oder Inertialsensorik-basierten Ortung umfassen. Dabei können mehrere oder alle dieser Komponenten in die Transponder 111, 121, 141 und Basisstationen 501-504 des Funkortungssystems integriert sein.

Die Basisstationen 501-504 sind mit einer als Gateway 500 ausgestalteten Auswertevorrichtung des Funkortungssystems verbunden. Die Transponder 111, 121, 141 des Funkortungssystems sind jeweils dafür ausgestaltet und eingerichtet, über die jeweilige Geräteschnittstelle 110, 120, 130, 140 eine Geräteadresse bzw. einen Geräteidentifikator des Kamerasystems 101 bzw. der RFID-Lesegeräte 102, 103 auszulesen und bei einer Erfassung ihrer Position mittels der Basisstationen 501-504 die Geräteadresse bzw. den Geräteidentifikator an die Basisstationen 501-504 zu übermitteln. Die Geräteadresse bzw. der Geräteidentifikator umfasst beispielweise eine MAC-Adresse, eine IP-Adresse bzw. eine Seriennummer der jeweiligen Objektidentifizierungsvorrichtung. Grundsätzlich kann eine Erfassung der Positionen der Transponder 111, 121, 141 nicht nur mittels der Basisstationen 501-504 erfolgen, sondern auch mittels weiterer Transponder des Funkortungssystems. Dementsprechend kann auch die Geräteadresse bzw. der Geräteidentifikator an weitere Transponder des Funkortungssystems übermittelt werden.

Das Gateway 500 des Funkortungssystems ist dafür konfiguriert, die erfassten Positionen 601-604 der Transponder 111, 121, 141 einschließlich der Geräteadressen bzw. Geräteidentifikatoren des Kamerasystems 101 bzw. der RFID-Lesegeräte 102, 103 an das Engineering-System 200 zu übermitteln. Dementsprechend ist das Engineering-System 200 dafür konfiguriert, anhand der übermittelten Positionen 601-604 der Transponder 111, 121, 141 einschließlich der Geräteadressen bzw. Geräteidentifikatoren den Transpondern 111, 121, 141 im Engineering-System 200 jeweils zugeordnete Ortsinformationen zu validieren, zu ergänzen bzw. zu korrigieren.

Insbesondere stellen auch die Antennen 104 des zweiten RFID-Lesegeräts 103 Objektidentifizierungsvorrichtungen dar. Dementsprechend ist im vorliegenden Ausführungsbeispiel jede Antenne 104 mit einem Transponder 141 des Funkortungssystems verbunden. Dabei sind die Transponder 141 über jeweils ein Antennenkabel 140 sowohl mit dem zweiten RFID-Lesegerät 103 als auch mit der jeweiligen Antenne 104 verbunden. Insbesondere erfolgt in diesem Fall über das Antennenkabel 140 zwischen dem zweiten RFID-Lesegerät 103 einerseits und dem Transponder 141 bzw. der Antenne 104 andererseits sowohl ein Datenaustausch als auch eine Energieversorgung des jeweiligen Transponders 141. Die Transponder 141 lesen über das jeweilige Antennenkabel 140 neben der Geräteadresse bzw. dem Geräteidentifikator des zweiten RFID-Lesegeräts 103 eine der jeweiligen Antenne 104 am zweiten RFID-Lesegerät 103 zugeordnete Anschlussnummer aus und übermitteln diese zur Auswertung an das Engineering-System 200. Zur Sicherstellung einer korrekten Transponder-Zuordnung wird vorzugsweise über das Engineering-System 200 bzw. mittels eines mit diesem verbundenen mobilen Bediengeräts eine optische Signalisierung an einem ausgewählten Transponder 111, 121, 141 ausgelöst, insbesondere wenn dieser mit der jeweiligen Objektidentifizierungsvorrichtung gekoppelt wird.

## Patentansprüche

1. Verfahren zum Betrieb einer funkbasierten und/oder optischen Objektidentifizierungsvorrichtung, bei dem
- die Objektidentifizierungsvorrichtung (101-104) über eine Geräteschnittstelle (110, 120, 130, 140) mit einem Transponder (111, 121, 141) eines Funkortungssystems verbunden wird, der an einer ausgewählten Stelle der Objektidentifizierungsvorrichtung angeordnet ist,
- der Transponder über die Geräteschnittstelle eine Geräteadresse und/oder einen Geräteidentifikator der Objektidentifizierungsvorrichtung ausliest,
- eine Position des Transponders mittels mehrerer Basisstationen (501-504) des Funkortungssystems und/oder weiterer Transponder erfasst wird,
- der Transponder bei einer Erfassung seiner Position die Geräteadresse und/oder den Geräteidentifikator der Objektidentifizierungsvorrichtung an die Basisstationen und/oder die weiteren Transponder übermittelt,
- eine mit den Basisstationen und/oder weiteren Transpondern verbundene Auswertevorrichtung (500) des Funkortungssystems die erfasste Position (601-604) des Transponders und die Geräteadresse und/oder den Geräteidentifikator der Objektidentifizierungsvorrichtung an ein der Objektidentifizierungsvorrichtung zugeordnetes Projektierungs- und/oder Überwachungssystem (200) übermittelt,
- das Projektierungs- und/oder Überwachungssystem anhand der übermittelten Position des Transponders und der Geräteadresse und/oder des Geräteidentifikators dem Transponder im Projektierungs- und/oder Überwachungssystem zugeordnete Ortsinformationen validiert, ergänzt und/oder korrigiert.

2. Verfahren nach Anspruch 1,
bei dem die funkbasierte und/oder optische Objektidentifizierungsvorrichtung ein RFID-Lesegerät, eine Antenne eines RFID-Lesegeräts und/oder ein Kamerasystem ist und bei dem die ausgewählte Stelle der Objektidentifizierungsvorrichtung, an der der Transponder angeordnet ist, für die Position der Objektidentifizierungsvorrichtung charakteristisch ist.

3. Verfahren nach einem der Ansprüche 1 oder 2,
bei dem die Geräteschnittstelle eine serielle Schnittstelle oder ein Antennenanschluss ist.

4. Verfahren nach Anspruch 3,
bei dem über die Geräteschnittstelle sowohl ein Datenaustausch als auch eine Energieversorgung des Transponders erfolgt.

5. Verfahren nach einem der Ansprüche 3 oder 4,
bei dem die Objektidentifizierungsvorrichtung eine Antenne eines RFID-Lesegeräts ist, bei dem der Transponder über jeweils ein Antennenkabel sowohl mit dem RFID-Lesegerät als auch mit der Antenne verbunden ist, bei dem über das Antennenkabel zwischen dem RFID-Lesegerät und dem Transponder sowohl ein Datenaustausch als auch eine Energieversorgung des Transponders erfolgt, bei dem der Transponder über das Antennenkabel zwischen dem RFID-Lesegerät und dem Transponder neben der Geräteadresse und/oder dem Geräteidentifikator des RFID-Lesegeräts eine der Antenne am RFID-Lesegerät zugeordnete Anschlussnummer ausliest und bei dem der Transponder diese Informationen zur Auswertung an das Projektierungs- und/oder Überwachungssystem übermittelt.

6. Verfahren nach einem der Ansprüche 1 bis 5,
bei dem die Geräteadresse und/oder der Geräteidentifikator eine MAC-Adresse, eine IP-Adresse und/oder eine Seriennummer der Objektidentifizierungsvorrichtung umfasst.

7. Verfahren nach einem der Ansprüche 1 bis 6,
bei dem das Funkortungssystem ein zumindest RFID-basiertes Real-time Locating System ist.

8. Verfahren nach einem der Ansprüche 1 bis 7,
bei dem mittels des Projektierungs- und/oder Überwachungssystems zur Sicherstellung einer korrekten Transponder-Zuordnung eine optische Signalisierung an einem ausgewählten Transponder ausgelöst wird.

9. Objektidentifizierungssystem zur Durchführung eines Verfahrens nach einem der Ansprüche 1 bis 8 mit
- mehreren funkbasierten und/oder optischen Objektidentifizierungsvorrichtungen, die jeweils über eine Geräteschnittstelle mit einem Transponder eines Funkortungssystems verbunden sind, der an einer ausgewählten Stelle der jeweiligen Objektidentifizierungsvorrichtung angeordnet ist,
- mehreren Basisstationen des Funkortungssystems zur Erfassung einer Position des jeweiligen Transponders,
- einer mit den Basisstationen und/oder Transpondern verbundene Auswertevorrichtung des Funkortungssystems,
- einem den Objektidentifizierungsvorrichtungen zugeordneten Projektierungs- und/oder Überwachungssystem,
- wobei die Transponder jeweils dafür ausgestaltet und eingerichtet sind, über die Geräteschnittstelle eine Geräteadresse und/oder einen Geräteidentifikator der jeweiligen Objektidentifizierungsvorrichtung auszulesen und bei einer Erfassung ihrer jeweiligen Position die Geräteadresse und/oder den Geräteidentifikator der jeweiligen Objektidentifizierungsvorrichtung an die Basisstationen und/oder weiteren Transponder zu übermitteln,
- wobei die Auswertevorrichtung dafür ausgestaltet und eingerichtet ist, die erfassten Positionen der Transponder und die Geräteadressen und/oder Geräteidentifikatoren der Objektidentifizierungsvorrichtungen an das Projektierungs- und/oder Überwachungssystem zu übermitteln,
- wobei das Projektierungs- und/oder Überwachungssystem dafür ausgestaltet und eingerichtet ist, anhand der übermittelten Positionen der Transponder und der Geräteadressen und/oder Geräteidentifikatoren den Transpondern jeweils zugeordnete Ortsinformationen zu validieren, zu ergänzen und/oder zu korrigieren.

10. Funkbasierte und/oder optische Objektidentifizierungsvorrichtung zur Durchführung eines Verfahrens nach einem der Ansprüche 1 bis 8 mit
- einem RFID-Lesegerät, einer Antenne eines RFID-Lesegeräts und/oder einem Kamerasystem,
- zumindest einem Transponder für ein Funkortungssystem, der an einer ausgewählten Stelle des RFID-Lesegeräts, der Antenne und/oder des Kamerasystems angeordnet und über eine Geräteschnittstelle mit dem RFID-Lesegerät, der Antenne und/oder dem Kamerasystem verbunden ist,
- wobei der Transponder dafür ausgestaltet und eingerichtet ist, über die Geräteschnittstelle eine Geräteadresse und/oder einen Geräteidentifikator des RFID-Lesegeräts, der Antenne und/oder des Kamerasystems auszulesen und bei einer Erfassung seiner Position die Geräteadresse und/oder den Geräteidentifikator an Basisstationen des Funkortungssystems und/oder an weitere Transponder zu übermitteln.
